# EUROPEAN PATENT APPLICATION

(11) **EP 4 596 280 A1**
(43) Date of publication of application: **06.08.2025**
(21) Application number: 22964084.2
(22) Date of filing: 04.11.2022
(51) Int. Cl.: B60K 1/02, B60L 15/38

(54) **CONTROL METHOD AND DEVICE**

(71) Applicant: Shenzhen Yinwang Intelligent Technologies Co., Ltd., Shenzhen, Guangdong 518129 (CN)
(72) Inventor: WANG, Yuqi, Shenzhen, Guangdong 518129 (CN); LI, Jinhang, Shenzhen, Guangdong 518129 (CN); CHAI, Benben, Shenzhen, Guangdong 518129 (CN)
(74) Representative: MERH-IP Matias Erny Reichl Hoffmann Patentanwälte PartG mbB
(86) International application number: PCT/CN2022/130059
(87) International publication number: WO 2024/092780

(57) **Abstract**

A control method and apparatus are provided. The method is applied to a vehicle including a first motor and a second motor. The method includes: obtaining reference information, where the reference information includes a driving mode of the vehicle (S201); and controlling, based on the driving mode of the vehicle, the second motor to be turned on or turned off (S202). The motor of the vehicle can be flexibly controlled in different driving modes. This helps improve cost-effectiveness and driving stability of the vehicle.

## Description

### TECHNICAL FIELD

This application relates to the field of vehicle technologies, and in particular, to a control method and apparatus.

### BACKGROUND

A drive motor in a vehicle can generate driving torque, and is often used as a power source of the vehicle.

To improve power performance and operation stability of the vehicle, a dual-motor driving form, a triple-motor driving form, or the like is often used to drive the vehicle. However, a vehicle equipped with a high-power drive motor or a plurality of drive motors usually suffers from a significantly shorter endurance range, leading to poor riding experience of a user.

### SUMMARY

This application discloses a control method and apparatus, to flexibly control a motor of a vehicle in different driving modes. This helps improve cost-effectiveness and driving stability of the vehicle.

According to a first aspect, this application provides a control method. The method is applied to a vehicle. The vehicle includes a first motor and a second motor. The method includes: obtaining reference information, where the reference information includes a driving mode of the vehicle; and controlling, based on the driving mode of the vehicle, the second motor to be turned on or turned off.

For example, the vehicle may be an autonomous driving vehicle, that is, an autonomous driving system independently performs all or some driving operations; or the vehicle may be a non-autonomous driving vehicle, that is, a natural driver needs to perform all driving operations.

For example, the vehicle may be a new energy vehicle, for example, an electric vehicle (electric vehicle, EV), a hybrid electric vehicle (hybrid electric vehicle, HEV), a range extended electric vehicle (range extended EV), a plug-in hybrid electric vehicle (Plug-in HEV), a fuel cell vehicle, or another new energy vehicle. This is not specifically limited herein.

In a possible implementation, the driving mode of the vehicle includes, for example, at least one of an energy saving mode, a normal mode, and a sport mode. The vehicle has longest endurance duration in the energy saving mode, and the vehicle has best acceleration performance in the sport mode. Endurance duration of the vehicle in the normal mode is less than endurance duration of the vehicle in the energy saving mode, but is greater than endurance duration of the vehicle in the sport mode. Acceleration performance of the vehicle in the normal mode is stronger than acceleration performance of the vehicle in the energy saving mode, but is weaker than acceleration performance of the vehicle in the sport mode.

For example, compared with in a case in which the vehicle is in the sport mode, the second motor is controlled to be in an off state for a longer time or with a higher probability in a case in which the vehicle is in the energy saving mode or the normal mode.

For example, the first motor is a front motor, and the second motor is a rear motor; or the first motor is a rear motor, and the second motor is a front motor. When the second motor is a front motor, the vehicle has better maneuverability and higher security. When the second motor is a rear motor, balance of the vehicle can be better controlled.

In the foregoing method, the motor of the vehicle can be flexibly controlled in different driving modes. This not only helps improve cost-effectiveness of the vehicle, but also helps improve smoothness of the vehicle.

Optionally, the reference information further includes a traveling speed of the vehicle. The controlling, based on the driving mode of the vehicle, the second motor to be turned on or turned off includes: controlling, based on the driving mode and the traveling speed, the second motor to be turned off.

In the foregoing implementation, the second motor is controlled, based on the driving mode and the traveling speed of the vehicle, to be turned on or turned off, so that both the cost-effectiveness of the vehicle and the smoothness of the vehicle are considered.

Optionally, the reference information further includes a status of the vehicle. The controlling, based on the driving mode and the traveling speed, the second motor to be turned off includes: controlling, based on the status of the vehicle, the driving mode, and the traveling speed, the second motor to be turned off.

For example, the status of the vehicle may be obtained from a ready state light of the vehicle, and the status of the vehicle may be indicated by using an identifier, a binary value, or the like. For example, when the ready state light is on, a first identifier is output, and the first identifier indicates that a status of a first vehicle is a drivable state; and when the ready state light is off, a second identifier is output, and the second identifier indicates that the status of the first vehicle is a non-drivable state. That the first vehicle is in the non-drivable state includes any one or more of the following: The vehicle is put in a park gear, the vehicle is being charged, or the vehicle is faulty.

In the foregoing implementation, the second motor is controlled, based on the status of the vehicle, the driving mode, and the traveling speed, to be turned off. This helps improve the cost-effectiveness and the smoothness of the vehicle.

Optionally, the controlling, based on the status of the vehicle, the driving mode, and the traveling speed, the second motor to be turned off includes: when the traveling speed is 0, the driving mode is an energy saving mode or a normal mode, and the status of the vehicle is a non-drivable state, controlling the second motor to be turned off.

In the foregoing implementation, the energy saving mode and the normal mode have a higher requirement on cost-effectiveness. When the vehicle is in the non-drivable state, the second motor can be turned off in time, to reduce energy consumption. This helps improve the cost-effectiveness of the vehicle.

Optionally, the reference information further includes a gear of the vehicle. The controlling, based on the status of the vehicle, the driving mode, and the traveling speed, the second motor to be turned off includes: when the gear is a park gear, the traveling speed is 0, the driving mode is a sport mode, and the status of the vehicle is a non-drivable state, controlling the second motor to be turned off.

In the foregoing implementation, in the sport mode, when the vehicle is put in the park gear, and the vehicle is in the non-drivable state, the second motor can be turned off in time, to reduce energy consumption. This helps improve the cost-effectiveness of the vehicle.

Optionally, the reference information further includes at least two of a gear of the vehicle, a status of the first motor, requested torque of the second motor, and actual torque of the second motor. The controlling, based on the driving mode and the traveling speed, the second motor to be turned off includes: controlling, based on the driving mode, the traveling speed, and the at least two of the gear, the status of the first motor, the requested torque of the second motor, and the actual torque of the second motor, the second motor to be turned off.

In the foregoing implementation, when it is determined that the second motor needs to be turned off, not only the status of the motor is considered, but also factors such as the traveling speed, the driving mode, and the gear of the vehicle, and the requested torque and the actual torque of the second motor are considered from a perspective of vehicle running. This improves the cost-effectiveness of the vehicle and the driving smoothness of the vehicle.

Optionally, the controlling, based on the driving mode, the traveling speed, and the at least two of the gear, the status of the first motor, the requested torque of the second motor, and the actual torque of the second motor, the second motor to be turned off includes: when the driving mode is a sport mode, the gear is a park gear, and all the following conditions are met, controlling the second motor to be turned off:
the traveling speed is not greater than a first speed threshold; and
the actual torque of the second motor is not greater than a first torque threshold.

In the foregoing implementation, in the sport mode, when the vehicle is put in the park gear, if the traveling speed of the vehicle is low, and output torque of the second motor is small, in this case, the second motor can be turned off, to reduce energy consumption.

Optionally, the controlling, based on the driving mode, the traveling speed, and the at least two of the gear, the status of the first motor, the requested torque of the second motor, and the actual torque of the second motor, the second motor to be turned off includes: when the driving mode is a normal mode, the gear is a park gear, and all the following conditions are met, controlling the second motor to be turned off:
the traveling speed is not greater than a second speed threshold; and
the actual torque of the second motor is not greater than a second torque threshold.

For example, the second speed threshold may be equal to the first speed threshold, and the second torque threshold may be equal to the first torque threshold.

In the foregoing implementation, in the normal mode, when the vehicle is put in the park gear, if the traveling speed of the vehicle is low, and output torque of the second motor is small, in this case, the second motor can be turned off, to reduce energy consumption.

Optionally, the controlling, based on the driving mode, the traveling speed, and the at least two of the gear, the status of the first motor, the requested torque of the second motor, and the actual torque of the second motor, the second motor to be turned off includes: when the driving mode is a normal mode, the gear is a drive gear, a reverse gear, or a neutral gear, and all the following conditions are met, controlling the second motor to be turned off:
the status of the first motor is not faulty;
the traveling speed is not less than a third speed threshold;
the requested torque of the second motor is not greater than a third torque threshold; and
the actual torque of the second motor is not greater than a fourth torque threshold, where the fourth torque threshold is greater than the third torque threshold.

In the foregoing implementation, in the normal mode, when the vehicle is put in any one of the drive gear, the reverse gear, and the neutral gear, if the traveling speed of the vehicle is high, but the requested torque and the actual torque of the second motor are small, in this case, the second motor is turned off. In this way, when rolling resistance of a wheel reaches a threshold due to the high speed, tooth surfaces of gear wheels of a drive shaft of the second motor can still be well fitted. This can not only improve driving stability of the vehicle, but also improve the cost-effectiveness of the vehicle.

Optionally, the driving mode is an energy saving mode. The controlling, based on the driving mode, the traveling speed, and the at least two of the gear, the status of the first motor, the requested torque of the second motor, and the actual torque of the second motor, the second motor to be turned off includes:
when the energy saving mode is a first energy saving mode, the gear is a drive gear, a reverse gear, or a neutral gear, and the status of the first motor is not faulty, controlling the second motor to be turned off; or
when the energy saving mode is a second energy saving mode, the gear is a park gear, and all the following conditions are met, controlling the second motor to be turned off: the traveling speed is not greater than a fourth speed threshold; and the actual torque of the second motor is not greater than a fifth torque threshold; or
when the energy saving mode is a second energy saving mode, the gear is a drive gear, a reverse gear, or a neutral gear, and all the following conditions are met, controlling the second motor to be turned off:
   the status of the first motor is not faulty;
   the traveling speed is not less than a fifth speed threshold;
   the requested torque of the second motor is not greater than a sixth torque threshold; and
   the actual torque of the second motor is not greater than a seventh torque threshold, where the seventh torque threshold is greater than the sixth torque threshold, and endurance duration of the vehicle in the first energy saving mode is greater than endurance duration of the vehicle in the second energy saving mode.

Herein, the first energy saving mode may be, for example, a super power saving mode or an electric-vehicle mode. In this mode, if the first motor is not faulty, the second motor is turned off, to reduce energy consumption and improve the cost-effectiveness of the vehicle.

The second energy saving mode may be, for example, an economy mode. In this mode, if the vehicle is put in the park gear, a current vehicle speed is low, and the actual torque of the second motor is small, it indicates that a driving force the second motor is currently expected to provide may be so small as to be negligible. In this case, the second motor can be turned off, to reduce energy consumption and improve the cost-effectiveness of the vehicle. In this mode, if the vehicle is put in any one of the drive gear, the reverse gear, and the neutral gear, the first motor is not faulty, and a current vehicle speed is greater than a vehicle speed threshold, but both requested torque and actual torque of the first motor are low, it indicates that working of the first motor only is enough to meet a driving requirement of the vehicle in the economy mode. In this case, the second motor can be turned off, to reduce energy consumption and improve the cost-effectiveness of the vehicle.

Optionally, the reference information further includes the gear of the vehicle. The controlling, based on the driving mode, the second motor to be turned on or turned off includes: controlling, based on the driving mode and the gear, the second motor to be turned on.

In the foregoing implementation, the second motor is controlled, based on the driving mode of the vehicle and the gear of the vehicle, to be turned on, so that cost-effectiveness requirements and power requirements of the vehicle in different driving modes and gears can be met.

Optionally, the controlling, based on the driving mode and the gear, the second motor to be turned on includes: when the driving mode is the sport mode, and the gear is the drive gear, the reverse gear, or the neutral gear, controlling the second motor to be turned on.

In the foregoing implementation, in the sport mode, when the vehicle is put in any one of the drive gear, the reverse gear, and the neutral gear, the second motor is turned on, to provide a sufficient power for the vehicle and therefore improve the acceleration performance of the vehicle.

Optionally, the reference information further includes at least one of the traveling speed of the vehicle, the status of the first motor, and the requested torque of the second motor. The controlling, based on the driving mode and the gear, the second motor to be turned on includes: controlling, based on the driving mode, the gear, and the at least one of the traveling speed, the status of the first motor, and the requested torque of the second motor, the second motor to be turned on.

Herein, the status of the first motor includes two states: faulty and not faulty. The status of the first motor may be indicated by using an identifier, a field, a binary value, or the like. For example, when the status of the first motor is indicated by using a first value, it indicates that the status of the first motor is faulty; and when the status of the first motor is indicated by using a second value, it indicates that the status of the first motor is not faulty.

The requested torque of the second motor may reflect a power requirement of the vehicle. Larger requested torque of the second motor indicates a larger power requirement of the vehicle.

In the foregoing implementation, when it is determined that the second motor needs to be turned on, not only the status of the motor is considered, but also factors such as the traveling speed, the driving mode, and the gear of the vehicle, and the requested torque of the second motor are considered from a perspective of vehicle running. This improves the cost-effectiveness of the vehicle and the driving smoothness of the vehicle.

Optionally, the controlling, based on the driving mode, the gear, and the at least one of the traveling speed, the status of the first motor, and the requested torque of the second motor, the second motor to be turned on includes: when the driving mode is the normal mode, the gear is the drive gear, the reverse gear, or the neutral gear, and at least one of the following conditions is met, controlling the second motor to be turned on:
the status of the first motor is faulty;
the traveling speed is not greater than a sixth speed threshold; and
the requested torque of the second motor is not less than an eighth torque threshold.

In the foregoing implementation, in the normal mode, when the vehicle is put in any one of the drive gear, the reverse gear, and the neutral gear, if the first motor of the vehicle is faulty, the second motor is turned on to replace the first motor in providing a driving force for the vehicle, so that normal traveling of the vehicle can be ensured; and/or if the requested torque of the second motor is large, the second motor is turned on, so that the vehicle can respond to the power requirement in time; and/or if the traveling speed of the vehicle is less than or equal to the sixth speed threshold, the second motor is turned on, so that it can be ensured that the vehicle meets an endurance requirement and an acceleration performance requirement in the normal mode.

Optionally, the controlling, based on the driving mode, the gear, and the at least one of the traveling speed, the status of the first motor, and the requested torque of the second motor, the second motor to be turned on includes:
when the driving mode is the first energy saving mode, the gear is the drive gear or the reverse gear, and the status of the first motor is faulty, controlling the second motor to be turned on; or
when the driving mode is the second energy saving mode, the gear is the drive gear, the reverse gear, or the neutral gear, and at least one of the following conditions is met, controlling the second motor to be turned on:
   the status of the first motor is faulty;
   the traveling speed is not greater than a seventh speed threshold; and
   the requested torque of the second motor is not less than a ninth torque threshold, where
   the endurance duration of the vehicle in the first energy saving mode is greater than the endurance duration of the vehicle in the second energy saving mode.

For example, the seventh speed threshold is less than the sixth speed threshold.

Herein, in the first energy saving mode, when the vehicle is put in the drive gear or the reverse gear, only if the first motor is faulty, the second motor is turned on, to support normal traveling of the vehicle in the first energy saving mode. In the second energy saving mode, when the vehicle is put in any one of the drive gear, the reverse gear, and the neutral gear, if the first motor of the vehicle is faulty, the second motor is turned on to replace the first motor in providing a driving force for the vehicle, so that normal traveling of the vehicle in the second energy saving mode can be ensured; and/or if the requested torque of the second motor is large, the second motor is turned on, so that the vehicle can respond to the power requirement in time; and/or if the traveling speed of the vehicle is less than or equal to the seventh speed threshold, the second motor is turned on, so that it can be ensured that the vehicle meets an endurance requirement and an acceleration performance requirement in the second energy saving mode.

Optionally, when the vehicle is in a same driving mode and a same gear, a preset speed threshold corresponding to the vehicle when the second motor is turned on is less than a preset speed threshold corresponding to the vehicle when the second motor is turned off.

For example, when the driving mode is the normal mode, and the gear is the drive gear, the reverse gear, or the neutral gear, the preset speed threshold corresponding to the vehicle when the second motor is turned on is the sixth speed threshold, the preset speed threshold corresponding to the vehicle when the second motor is turned on or turned off is the third speed threshold, and the sixth speed threshold is less than the third speed threshold.

For another example, when the driving mode is the second energy saving mode, and the gear is the drive gear, the reverse gear, or the neutral gear, the seventh speed threshold corresponding to the vehicle when the second motor is turned on is less than the fifth speed threshold corresponding to the vehicle when the second motor is turned off.

In the foregoing implementation, when the second motor needs to be controlled, based on the traveling speed of the vehicle, to be turned on or turned off, in a same driving mode and a same gear, a preset speed threshold corresponding to the vehicle when the second motor is turned on is less than a preset speed threshold corresponding to the vehicle when the second motor is turned off, so that the second motor can be prevented from being frequently switched between on and off in the driving mode and the gear. This helps prolong a service life of the motor.

Optionally, when the vehicle is in a same driving mode and a same gear, required duration for which the vehicle meets a corresponding motor turn-on condition is less than required duration for which the vehicle meets a corresponding motor turn-off condition.

In the foregoing implementation, the required duration for meeting the motor turn-on condition is set to a smaller value, so that the vehicle can respond to a power request in time. The required duration for meeting the motor turn-off condition is set to a larger value. This helps reduce interference of noise, vibration, and harshness NVH.

Optionally, the controlling the second motor to be turned on or turned off includes: controlling, through a switch apparatus, the second motor to be turned on or turned off. The switch apparatus is connected to the second motor. When the switch apparatus is turned on, the second motor is turned on, or when the switch apparatus is turned off, the second motor is turned off.

For example, the switch apparatus may be any one of the following: an insulated gate bipolar transistor IGBT, a metal-oxide-semiconductor field-effect transistor MOS, and a clutch. Herein, the IGBT is suitable for conducting and controlling medium to extremely high currents, and the MOS is suitable for conducting and controlling low to medium currents. The clutch is a pure mechanical structure and can be configured to disconnect a drive bridge. The IGBT and the MOS have advantages such as a simple structure, quick state switching, and high execution efficiency.

In the foregoing implementation, the switch apparatus is turned on to control the second motor to be turned on, and the switch apparatus is turned off to control the second motor to be turned off. The switch apparatus quickly responds to state switching, so that control efficiency of the second motor can be improved.

According to a second aspect, this application provides a control apparatus. The apparatus is configured to control a vehicle. The vehicle includes a first motor and a second motor. The apparatus includes: an obtaining unit, configured to obtain a driving mode of the vehicle; and a processing unit, configured to control, based on the driving mode of the vehicle, the second motor to be turned on or turned off.

Herein, the apparatus may be a motor controller of the second motor or a component in a motor controller, or the apparatus may be a vehicle control unit or a component in a vehicle control unit. The component may be, for example, a chip or an integrated circuit.

For example, when the apparatus is the vehicle control unit, the processing unit is specifically configured to: generate indication information based on the driving mode of the vehicle, where the indication information indicates the second motor to be turned on or turned off; and send the indication information to a motor controller of the second motor, so that the motor controller controls, based on the indication information, the second motor to be turned on or turned off.

For example, the first motor is a front motor, and the second motor is a rear motor; or the first motor is a rear motor, and the second motor is a front motor.

Optionally, reference information further includes a traveling speed of the vehicle. The processing unit is specifically configured to control, based on the driving mode and the traveling speed, the second motor to be turned off.

Optionally, the reference information further includes a status of the vehicle. The processing unit is specifically configured to control, based on the status of the vehicle, the driving mode, and the traveling speed, the second motor to be turned off.

Optionally, the processing unit is specifically configured to: when the traveling speed is 0, the driving mode is an energy saving mode or a normal mode, and the status of the vehicle is a non-drivable state, control the second motor to be turned off.

Optionally, the reference information further includes a gear of the vehicle. The processing unit is specifically configured to: when the gear is a park gear, the traveling speed is 0, the driving mode is a sport mode, and the status of the vehicle is a non-drivable state, control the second motor to be turned off.

Optionally, the reference information further includes at least two of a gear of the vehicle, a status of the first motor, requested torque of the second motor, and actual torque of the second motor. The processing unit is specifically configured to control, based on the driving mode, the traveling speed, and the at least two of the gear, the status of the first motor, the requested torque of the second motor, and the actual torque of the second motor, the second motor to be turned off.

Optionally, the processing unit is specifically configured to: when the driving mode is a sport mode, the gear is a park gear, and all the following conditions are met, control the second motor to be turned off:
the traveling speed is not greater than a first speed threshold; and
the actual torque of the second motor is not greater than a first torque threshold.

Optionally, the processing unit is specifically configured to: when the driving mode is a normal mode, the gear is a park gear, and all the following conditions are met, control the second motor to be turned off:
the traveling speed is not greater than a second speed threshold; and
the actual torque of the second motor is not greater than a second torque threshold.

Optionally, the processing unit is specifically configured to: when the driving mode is a normal mode, the gear is a drive gear, a reverse gear, or a neutral gear, and all the following conditions are met, control the second motor to be turned off:
the status of the first motor is not faulty;
the traveling speed is not less than a third speed threshold;
the requested torque of the second motor is not greater than a third torque threshold; and
the actual torque of the second motor is not greater than a fourth torque threshold, where the fourth torque threshold is greater than the third torque threshold.

Optionally, the driving mode is an energy saving mode. The processing unit is specifically configured to:
when the energy saving mode is a first energy saving mode, the gear is a drive gear, a reverse gear, or a neutral gear, and the status of the first motor is not faulty, control the second motor to be turned off; or
when the energy saving mode is a second energy saving mode, the gear is a park gear, and all the following conditions are met, control the second motor to be turned off: the traveling speed is not greater than a fourth speed threshold; and the actual torque of the second motor is not greater than a fifth torque threshold; or
when the energy saving mode is a second energy saving mode, the gear is a drive gear, a reverse gear, or a neutral gear, and all the following conditions are met, control the second motor to be turned off:
   the status of the first motor is not faulty;
   the traveling speed is not less than a fifth speed threshold;
   the requested torque of the second motor is not greater than a sixth torque threshold; and
   the actual torque of the second motor is not greater than a seventh torque threshold, where the seventh torque threshold is greater than the sixth torque threshold, and endurance duration of the vehicle in the first energy saving mode is greater than endurance duration of the vehicle in the second energy saving mode.

Optionally, the reference information further includes the gear of the vehicle. The processing unit is specifically configured to control, based on the driving mode and the gear, the second motor to be turned on.

Optionally, the processing unit is specifically configured to: when the driving mode is the sport mode, and the gear is the drive gear, the reverse gear, or the neutral gear, control the second motor to be turned on.

Optionally, the reference information further includes at least one of the traveling speed of the vehicle, the status of the first motor, and the requested torque of the second motor. The processing unit is specifically configured to control, based on the driving mode, the gear, and the at least one of the traveling speed, the status of the first motor, and the requested torque of the second motor, the second motor to be turned on.

Optionally, the processing unit is specifically configured to: when the driving mode is the normal mode, the gear is the drive gear, the reverse gear, or the neutral gear, and at least one of the following conditions is met, control the second motor to be turned on:
the status of the first motor is faulty;
the traveling speed is not greater than a sixth speed threshold; and
the requested torque of the second motor is not less than an eighth torque threshold.

Optionally, the processing unit is specifically configured to:
when the driving mode is the first energy saving mode, the gear is the drive gear or the reverse gear, and the status of the first motor is faulty, control the second motor to be turned on; or
when the driving mode is the second energy saving mode, the gear is the drive gear, the reverse gear, or the neutral gear, and at least one of the following conditions is met, control the second motor to be turned on:
   the status of the first motor is faulty;
   the traveling speed is not greater than a seventh speed threshold; and
   the requested torque of the second motor is not less than a ninth torque threshold, where
   the endurance duration of the vehicle in the first energy saving mode is greater than the endurance duration of the vehicle in the second energy saving mode.

Optionally, when the vehicle is in a same driving mode and a same gear, a preset speed threshold corresponding to the vehicle when the second motor is turned on is less than a preset speed threshold corresponding to the vehicle when the second motor is turned off.

Optionally, when the vehicle is in a same driving mode and a same gear, required duration for which the vehicle meets a corresponding motor turn-on condition is less than required duration for which the vehicle meets a corresponding motor turn-off condition.

Optionally, the processing unit is specifically configured to control, through a switch apparatus, the second motor to be turned on or turned off. The switch apparatus is connected to the second motor. When the switch apparatus is turned on, the second motor is turned on, or when the switch apparatus is turned off, the second motor is turned off.

For example, the switch apparatus may be any one of the following: an insulated gate bipolar transistor IGBT, a metal-oxide-semiconductor field-effect transistor MOS, and a clutch.

According to a third aspect, this application provides a control apparatus. The apparatus includes a processor and a memory. The memory is configured to store program instructions. The processor invokes the program instructions in the memory, to enable the apparatus to perform the method in the first aspect or any possible implementation of the first aspect.

According to a fourth aspect, this application provides a motor control system. The system includes a switch apparatus and a control apparatus. The switch apparatus is connected to the control apparatus. The control apparatus is configured to perform the method in the first aspect or any possible implementation of the first aspect.

Further, the control apparatus may be the apparatus in the second aspect or any possible implementation of the second aspect, or the apparatus in the third aspect.

According to a fifth aspect, this application provides a vehicle. The vehicle includes the apparatus in the second aspect or any possible implementation of the second aspect, or includes the motor control system in the fourth aspect.

According to a sixth aspect, this application provides a computer-readable storage medium, including computer instructions. When the computer instructions are run by a processor, the method in the first aspect or any possible implementation of the first aspect is implemented.

According to a seventh aspect, this application provides a computer program product. When the computer program product is executed by a processor, the method in the first aspect or any possible embodiment of the first aspect is implemented. The computer program product may be, for example, a software installation package. When the method provided in any possible design of the first aspect needs to be used, the computer program product may be downloaded and executed on the processor, to implement the method in the first aspect or any possible embodiment of the first aspect.

For specific beneficial effects of the second aspect to the seventh aspect, refer to descriptions of beneficial effects of the first aspect. Details are not described herein again.

### BRIEF DESCRIPTION OF DRAWINGS

FIG. 1A is a diagram of an architecture of a motor control system according to an embodiment of this application;
FIG. 1B is a diagram of an architecture of another motor control system according to an embodiment of this application;
FIG. 2 is a schematic flowchart of a control method according to an embodiment of this application;
FIG. 3A is a diagram of determining that a second motor needs to be turned off according to an embodiment of this application;
FIG. 3B is a diagram of determining that a second motor needs to be turned off according to an embodiment of this application;
FIG. 3C is a diagram of determining that a second motor needs to be turned off according to an embodiment of this application;
FIG. 3D is a diagram of determining that a second motor needs to be turned off according to an embodiment of this application;
FIG. 3E is a diagram of determining that a second motor needs to be turned off according to an embodiment of this application;
FIG. 3F is a diagram of determining that a second motor needs to be turned off according to an embodiment of this application;
FIG. 4A is a diagram of determining that a second motor needs to be turned on according to an embodiment of this application;
FIG. 4B is a diagram of determining that a second motor needs to be turned on according to an embodiment of this application;
FIG. 4C is a diagram of determining that a second motor needs to be turned on according to an embodiment of this application;
FIG. 5A is a diagram of determining that a second motor needs to be turned off according to an embodiment of this application;
FIG. 5B is a diagram of determining that a second motor needs to be turned on according to an embodiment of this application;
FIG. 6 is a schematic flowchart of another control method according to an embodiment of this application;
FIG. 7 is a diagram of a structure of a control apparatus according to an embodiment of this application; and
FIG. 8 is a diagram of a structure of another control device according to an embodiment of this application.

### DESCRIPTION OF EMBODIMENTS

It should be noted that modifiers such as "first" and "second" in this application are merely intended to distinguish between different described objects, but are not intended to limit positions, a sequence, priorities, quantities, content, or the like of the described objects. For example, if the described object is a "field", ordinal numbers before the "field" in a "first field" and a "second field" do not limit positions or a sequence of the "fields", and "first" and "second" do not limit whether "fields" modified by "first" and "second" are in a same message, and do not limit a sequence of the "first field" and the "second field". For another example, if the described object is a "level", ordinal numbers before the "level" in a "first level" and a "second level" do not limit priorities of the "levels". For another example, a quantity of described objects is not limited by modifiers, and may be one or more. A "first device" is used as an example. A quantity of "devices" may be one or more. In addition, objects modified by different modifiers may be the same or different. For example, if the described object is a "device", a "first device" and a "second device" may be a same device, devices of a same type, or devices of different types. For another example, if the described object is "information", "first information" and "second information" may be information of same content or information of different content. In conclusion, in embodiments of this application, the modifiers used to distinguish between the described objects do not constitute any limitation on the described objects. For descriptions of the described objects, refer to descriptions of the context in the claims or embodiments. The modifiers should not constitute any unnecessary limitation.

It should be noted that, in embodiments of this application, expressions such as "at least one of a1, a2, ..., and an" are used, including a case in which any one of a1, a2, ..., and an exists alone, and also including any combination of a1, a2, ..., and an. Each case may exist alone. For example, an expression of "at least one of a, b, and c" includes cases of a single a, a single b, a single c, a combination of a and b, a combination of a and c, a combination of b and c, or a combination of a, b, and c.

The following describes technical solutions of this application with reference to accompanying drawings.

The following first describes diagrams of some motor control systems according to an embodiment of this application. The system can be configured to control a motor, to improve cost-effectiveness and driving stability of a vehicle.

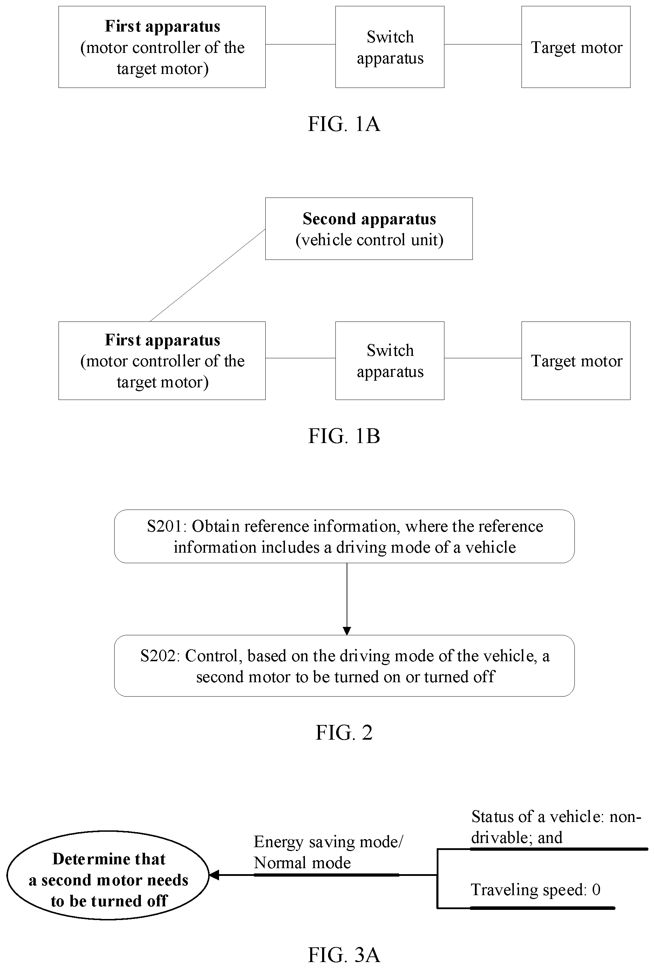

FIG. 1A is a diagram of a motor control system according to an embodiment of this application. As shown in FIG. 1A, the system includes a first apparatus, a switch apparatus, and a target motor. The first apparatus, the switch apparatus, and the target motor are deployed on a same vehicle. The target motor is configured to provide a driving force for the vehicle.

The switch apparatus is connected to both the first apparatus and the target motor. The first apparatus may control, through the switch apparatus, the target motor to be turned on or turned off. For example, when the switch apparatus is turned on, the target motor is turned on, or when the switch apparatus is turned off, the target motor is turned off. Herein, the switch apparatus may exist independently of the first apparatus, or may be integrated into the first apparatus. This is not specifically limited herein.

The first apparatus may be a motor controller of the target motor, or may be a component in a motor controller. The component may be, for example, a chip or an integrated circuit. The motor controller may be, for example, a microcontroller unit (microcontroller unit, MCU) or a microprocessor unit (microprocessor unit, MPU).

The switch apparatus has two states: an off state and an on state. For example, when the target motor needs to be turned on, the switch apparatus is configured to be turned on; and when the target motor needs to be turned off, the switch apparatus is configured to be turned off.

The switch apparatus may be a switching transistor. The switching transistor may be, for example, an insulated gate bipolar transistor (insulated gate bipolar transistor, IGBT) or a metal-oxide-semiconductor field-effect transistor (metal-oxide-semiconductor field-effect transistor, MOSFET, MOS for short). The switch apparatus may alternatively be a clutch. This is not specifically limited herein.

The target motor is a to-be-controlled motor. The target motor may be a front motor or a rear motor. This is not specifically limited herein.

For example, the target motor may alternatively be an auxiliary motor in the vehicle, and is configured to assist a main motor in the vehicle to provide a driving force for the vehicle.

FIG. 1B is a diagram of another motor control system according to an embodiment of this application. Compared with the motor control system shown in FIG. 1A, the system shown in FIG. 1B further includes a second apparatus. The second apparatus may communicate with the first apparatus in a wired or wireless manner. For specific descriptions of the first apparatus, the switch apparatus, and the target motor in FIG. 1B, refer to descriptions of corresponding content in FIG. 1A. Details are not described herein again.

For example, in FIG. 1B, the first apparatus may receive indication information from the second apparatus. The indication information indicates a second motor to be turned on or turned off. The first apparatus controls, based on the indication information, the second motor to be turned on or turned off.

The second apparatus may be a vehicle control unit, or may be a component in a vehicle control unit. The component may be, for example, a chip or an integrated circuit. The vehicle control unit may be an integrated software and hardware platform that supports control of a vehicle body and control of a chassis, for example, a vehicle domain controller (vehicle domain controller, VDC), or may be an integrated software and hardware platform configured to support control of the chassis, for example, a chassis domain controller.

The motor control system shown in FIG. 1A or FIG. 1B may be used in any one of a fully autonomous driving scenario (that is, an autonomous driving system performs all operations, and a natural driver does not participate in decision-making and operations), a human-machine co-driving scenario (that is, the autonomous driving system and the natural driver jointly complete driving-related operations), and a human driving scenario (that is, the natural driver performs all driving operations).

The motor control system shown in FIG. 1A or FIG. 1B may be used in a plurality of types of networks, for example, used in one or more of the following types of networks: SparkLink (SparkLink), a long term evolution (long term evolution, LTE) network, a 5th generation mobile communication technology (5th generation mobile communication technology, 5G), a wireless local area network (for example, Wi-Fi), Bluetooth (Bluetooth, BT), Zigbee (Zigbee), or a vehicle-mounted short-distance wireless communication network.

It should be noted that FIG. 1A or FIG. 1B is merely an example of a diagram of an architecture, but a quantity of network elements included in the system shown in FIG. 1A or FIG. 1B is not limited. In addition to functional entities shown in FIG. 1A or FIG. 1B, FIG. 1A or FIG. 1B may further include another functional entity that is not shown in FIG. 1A or FIG. 1B. In addition, the method provided in embodiments of this application may be applied to the communication system shown in FIG. 1A or FIG. 1B. Certainly, the method provided in embodiments of this application may also be applied to another motor control system. This is not limited in embodiments of this application.

FIG. 2 is a schematic flowchart of a control method according to an embodiment of this application.

The method in FIG. 2 is applied to a control apparatus in a vehicle. The control apparatus may be, for example, the first apparatus in FIG. 1A or the second apparatus in FIG. 1B.

In this embodiment of this application, the vehicle includes a first motor and a second motor. Both the first motor and the second motor may be configured to provide a driving force for the vehicle. An example in which the second motor is the foregoing target motor is used for description of the solution. In other words, the second motor is a to-be-controlled motor in this embodiment of this application.

For example, the first motor is a front motor, and the second motor is a rear motor; or the first motor is a rear motor, and the second motor is a front motor. Herein, a quantity of motors is not limited in this embodiment of this application.

For example, for a dual-motor four-wheel drive vehicle, maneuverability of a main rear-wheel drive vehicle (that is, a main motor is a rear motor, and an auxiliary motor is a front motor) is better than maneuverability of a main front-wheel drive vehicle (that is, the main motor is a front motor, and the auxiliary motor is a rear motor). It may be understood that, when the to-be-controlled second motor is the front motor, the vehicle has better maneuverability and higher security; and when the to-be-controlled second motor is the rear motor, balance of the vehicle can be better controlled, and the vehicle has better straight-line traveling performance.

Herein, the vehicle may be an autonomous driving vehicle. The autonomous driving vehicle is configured with an autonomous driving system. The autonomous driving system may independently perform all or some driving operations based on different autonomous driving capabilities. In some possible embodiments, the vehicle may alternatively be a non-autonomous driving vehicle, that is, a natural driver needs to perform all driving operations.

Herein, the vehicle may be a new energy vehicle. The new energy vehicle may be, for example, an electric vehicle (electric vehicle, EV), a hybrid electric vehicle (hybrid electric vehicle, HEV), a range extended electric vehicle (range extended EV), a plug-in hybrid electric vehicle (Plug-in HEV), a fuel cell vehicle, or another new energy vehicle. This is not specifically limited herein.

The method includes but is not limited to the following steps.

S201: Obtain reference information, where the reference information includes a driving mode of the vehicle.

Herein, the driving mode of the vehicle includes at least one of an energy saving mode, a normal mode, and a sport mode.

In the three modes, the vehicle has longest endurance duration in the energy saving mode, and the vehicle has best acceleration performance in the sport mode. Endurance duration of the vehicle in the normal mode is less than endurance duration of the vehicle in the energy saving mode, but is greater than endurance duration of the vehicle in the sport mode. Acceleration performance of the vehicle in the normal mode is stronger than acceleration performance of the vehicle in the energy saving mode, but is weaker than acceleration performance of the vehicle in the sport mode.

Further, the energy saving mode includes a first energy saving mode and a second energy saving mode. Endurance duration of the vehicle in the first energy saving mode is greater than endurance duration of the vehicle in the second energy saving mode.

For example, the first energy saving mode may be a super power saving mode, an electric-vehicle (electric-vehicle, EV) mode, or the like. The second energy saving mode may be an economy mode. The economy mode is also referred to as an ecology-conservation-optimization (ecology-conservation-optimization, ECO) mode. The economy mode can ensure comfort of basic driving.

The normal mode is also referred to as a standard mode or a comfort mode. In the normal mode, aspects of performance of the vehicle are stable and balanced, and power performance and cost-effectiveness remain in a balanced state. The normal mode is also the most commonly used driving state during daily driving.

In the sport mode, the vehicle has good acceleration performance, and a power system of the vehicle responds sensitively. The sport mode is usually used in a scenario in which a requirement on vehicle power is high, for example, overtaking and accelerating or climbing.

For example, the driving mode of the vehicle may be obtained based on driving mode information input by a user. For example, in a human driving scenario or a human-machine co-driving scenario, the driving mode information may be input by the user by using a touchscreen of in-vehicle infotainment, or may be input by the user by using a button of in-vehicle infotainment, or may be input by the user through a voice or a gesture. This is not specifically limited herein. In some possible embodiments, in a fully autonomous driving scenario, the driving mode of the vehicle may alternatively be obtained by the control apparatus from a control center of the autonomous driving system of the vehicle.

In some possible embodiments, the reference information further includes a traveling speed of the vehicle. For example, the control apparatus may obtain the traveling speed of the vehicle from an inertial measurement unit (inertial measurement unit, IMU).

In some possible embodiments, the reference information further includes a gear of the vehicle. For example, the control apparatus may obtain the gear of the vehicle from a gear sensor or a gear switch sensor of the vehicle.

Herein, the gear of the vehicle includes at least one of a drive gear, a reverse gear, a neutral gear, and a park gear.

The drive (drive) gear is referred to as a D gear for short. The D gear needs to be used when the vehicle travels forward.

The reverse (reverse) gear is referred to as an R gear for short, and is also referred to as a reverse gear. The R gear is used when the vehicle is reversed.

The neutral (neutral) gear is referred to as an N gear for short. The N gear is used when the vehicle is parked for a short time. When the vehicle needs to be parked temporarily (for example, when a traffic light is lighted), the vehicle is put in the N gear, to stop the vehicle from moving without interrupting power of the vehicle.

The park (park) gear is referred to as a P gear for short, and is also referred to as a park gear. The P gear is used when the vehicle is parked for a long time. When the vehicle is put in the P gear, a power output of the vehicle is interrupted, and the vehicle does not move.

In some possible embodiments, the reference information further includes at least one of a status of the first motor, requested torque of the second motor, and actual torque of the second motor.

Herein, the status of the first motor includes two states: faulty and not faulty. The status of the first motor may be indicated by using an identifier, a field, a binary value, or the like. For example, when the status of the first motor is indicated by using a first value, it indicates that the status of the first motor is faulty; and when the status of the first motor is indicated by using a second value, it indicates that the status of the first motor is not faulty. It may be understood that the status of the first motor may be obtained by the control apparatus from the first motor.

For example, the requested torque of the second motor may be obtained through calculation based on information about a depth at which an accelerator pedal of the vehicle is stepped on or information about a depth at which a brake pedal is stepped on. It can be learned that the requested torque of the second motor may reflect a power requirement of the vehicle. Larger requested torque of the second motor indicates a larger power requirement of the vehicle.

The actual torque of the second motor is actual output torque of the second motor, and is also referred to as motor torque or motor moment, that is, indicates a value of a force of rotation of the second motor. Larger actual torque of the second motor indicates more sufficient power sources of the vehicle. For example, the actual torque of the second motor may be obtained by the control apparatus from the second motor.

In some possible embodiments, the reference information further includes a status of the vehicle.

For example, the control apparatus may obtain the status of the vehicle from a ready state light of the vehicle. The ready state light may also be referred to as a ready light.

Herein, the status of the vehicle may be indicated by using an identifier, a binary value, or the like. For example, when the ready state light is on, the ready state light outputs a first identifier, the first identifier indicates that the status of the vehicle is a drivable state (that is, ready), and this state indicates that the vehicle is ready, is started successfully, and can depart at any time; and when the ready state light is off, the ready state light outputs a second identifier, and the second identifier indicates that the status of the vehicle is a non-drivable state (that is, not ready).

The ready state light is off, and the status of the vehicle is the non-drivable state when any one of the following conditions is met: The vehicle is put in the park gear, the vehicle is being charged, and the vehicle is faulty. A fault cause of the vehicle includes but is not limited to: A filament of a charging indicator is disconnected, a cable head in a battery post is loose, a motor controller is faulty, a line is faulty, or the like.

It may be understood that, when the status of the vehicle is the non-drivable state, the traveling speed of the vehicle is 0.

S202: Control, based on the driving mode of the vehicle, the second motor to be turned on or turned off.

In an implementation, when the control apparatus is the first apparatus in FIG. 1A, for example, a motor controller of the second motor, the control apparatus controls the second motor to be turned on or turned off.

In an implementation, when the control apparatus is the second apparatus in FIG. 1B, for example, a vehicle control unit, the controlling the second motor to be turned on or turned off includes: generating indication information, where the indication information indicates the second motor to be turned on or turned off; and sending the indication information to a motor controller of the second motor, so that the motor controller of the second motor controls, based on the indication information, the second motor to be turned on or turned off. Correspondingly, when the indication information indicates the second motor to be turned on, the motor controller of the second motor controls, based on the indication information, the second motor to be turned on; and when the indication information indicates the second motor to be turned off, the motor controller of the second motor controls, based on the indication information, the second motor to be turned off.

In this embodiment of this application, the controlling the second motor to be turned on or turned off includes: controlling, through a switch apparatus, the second motor to be turned on or turned off. Specifically, the switch apparatus has two states: an off state and an on state. When the switch apparatus is turned on, the second motor is turned on, or when the switch apparatus is turned off, the second motor is turned off.

For example, the switch apparatus may be a switching transistor. The switching transistor may be, for example, an IGBT and a MOS. In some possible embodiments, the switch apparatus may alternatively be a clutch. This is not specifically limited herein.

The IGBT is used as an example to describe a working principle of the switching transistor. The IGBT is a composite fully-controlled voltage-driven power semiconductor device including a bipolar junction transistor (bipolar junction transistor, BJT) and an insulated gate field-effect transistor (metal oxide semiconductor, MOS), and has two advantages: high input impedance and low turn-on voltage. A switching function of the IGBT is as follows: A forward gate voltage is applied to form a channel and provide a base current for a (PNP) transistor, so that the IGBT is turned on. Conversely, a reverse gate voltage is applied to eliminate the channel and cut off the base current, so that the IGBT is turned off.

For example, when the motor controller determines that the second motor needs to be turned on, a forward voltage may be output to a gate of the IGBT, to turn on the IGBT (which is equivalent to turning on the switch apparatus), so that the second motor is turned on. When the motor controller determines that the second motor needs to be turned off, a reverse voltage may be output to the gate of the IGBT, to turn off the IGBT (which is equivalent to turning off the switch apparatus), so that the second motor is turned off. Therefore, when the IGBT is used as the switch apparatus, it is easy to control turn-on and turn-off, and a speed at which the switch apparatus is switched between on and off is high. This helps improve control efficiency of the second motor.

In this embodiment of this application, when the second motor is controlled, based on the driving mode of the vehicle, to be turned on or turned off, the second motor is turned off for a longer time in a case in which the driving mode is the energy saving mode compared with in a case in which the driving mode is the normal mode or the sport mode. In addition, from a probability perspective, a probability of controlling the second motor to be turned off in the energy saving mode is higher than a probability of controlling the second motor to be turned off in the normal mode or the sport mode, and a probability of controlling the second motor to be turned on in the energy saving mode is lower than a probability of controlling the second motor to be turned on in the normal mode or the sport mode.

In this embodiment of this application, reference information for determining that the second motor needs to be turned on is different from reference information for determining that the second motor needs to be turned off. The following separately describes, based on specific content in the reference information, a process of determining that the second motor needs to be turned on and a process of determining that the second motor needs to be turned off.

### (1) The second motor needs to be turned off.

In this embodiment of this application, the reference information further includes a traveling speed of the vehicle. The controlling, based on the driving mode of the vehicle, the second motor to be turned on or turned off includes: controlling, based on the driving mode of the vehicle and the traveling speed of the vehicle, the second motor to be turned off.

For example, when the driving mode of the vehicle is the energy saving mode or the normal mode, if the traveling speed of the vehicle is high, the second motor needs to be in an off state. In this way, when rolling resistance of a wheel reaches a threshold, tooth surfaces of gear wheels of a drive shaft of the second motor can still be well fitted. This effectively improves driving stability of the vehicle and eliminates interference of noise, vibration, and harshness (noise, vibration, harshness, NVH).

Further, the reference information further includes a status of the vehicle. The controlling, based on the driving mode of the vehicle and the traveling speed of the vehicle, the second motor to be turned off is specifically: controlling, based on the driving mode of the vehicle, the traveling speed of the vehicle, and the status of the vehicle, the second motor to be turned off.

In an implementation, with reference to a determining diagram shown in FIG. 3A, when the driving mode of the vehicle is the energy saving mode or the normal mode, the status of the vehicle is the non-drivable state, and the traveling speed of the vehicle is 0, the second motor is controlled to be turned off.

It can be learned that, compared with the sport mode, the energy saving mode and the normal mode have a higher requirement on cost-effectiveness. When the vehicle is in the non-drivable state, the second motor can be turned off in time, to reduce energy consumption. This helps improve the cost-effectiveness of the vehicle.

Further, the reference information further includes a gear of the vehicle. The controlling, based on the driving mode of the vehicle, the traveling speed of the vehicle, and the status of the vehicle, the second motor to be turned off is specifically: controlling, based on the driving mode of the vehicle, the traveling speed of the vehicle, the status of the vehicle, and the gear of the vehicle, the second motor to be turned off.

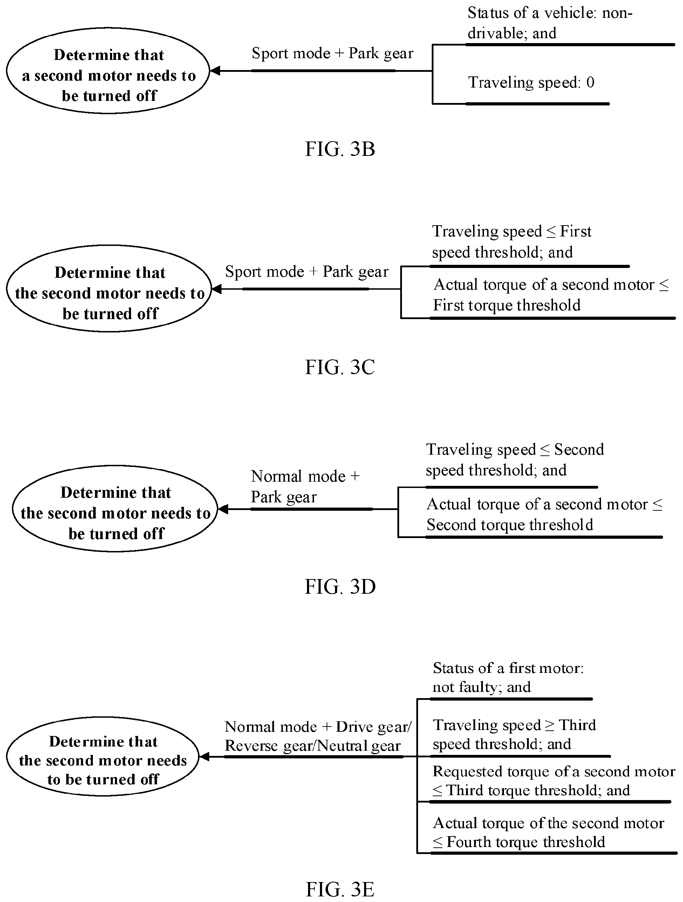

In an implementation, with reference to a determining diagram shown in FIG. 3B, when the driving mode of the vehicle is the sport mode, the gear of the vehicle is the park gear, the traveling speed of the vehicle is 0, and the status of the vehicle is the non-drivable state, the second motor is controlled to be turned off.

It can be learned that, in the sport mode, only when the vehicle is put in the park gear, and the vehicle is in the non-drivable state, the second motor can be turned off in time, to reduce energy consumption. This helps improve the cost-effectiveness of the vehicle.

In this embodiment of this application, in addition to the traveling speed of the vehicle, the reference information may further include at least two of a gear of the vehicle, a status of the first motor, requested torque of the second motor, and actual torque of the second motor. The controlling, based on the driving mode of the vehicle and the traveling speed of the vehicle, the second motor to be turned off includes: controlling, based on the driving mode of the vehicle, the traveling speed of the vehicle, and the at least two of the gear of the vehicle, the status of the first motor, the requested torque of the second motor, and the actual torque of the second motor, the second motor to be turned off.

In an implementation, with reference to a determining diagram shown in FIG. 3C, when the driving mode of the vehicle is the sport mode, the gear of the vehicle is the park gear, and all the following conditions are met, the second motor is controlled to be turned off:
the traveling speed of the vehicle is not greater than a first speed threshold; and
the actual torque of the second motor is not greater than a first torque threshold.

Herein, the first speed threshold and the first torque threshold are preset based on experience.

It can be learned that, in the sport mode, only when the vehicle is put in the park gear, if the traveling speed of the vehicle is low, and output torque of the second motor is small, in this case, the second motor can be turned off, to reduce energy consumption.

In an implementation, with reference to a determining diagram shown in FIG. 3D, when the driving mode of the vehicle is the normal mode, the gear of the vehicle is the park gear, and all the following conditions are met, the second motor is controlled to be turned off:
the traveling speed of the vehicle is not greater than a second speed threshold; and
the actual torque of the second motor is not greater than a second torque threshold.

Herein, the second speed threshold and the second torque threshold are preset based on experience. For example, the second speed threshold may be equal to the first speed threshold, and the second torque threshold may be equal to the first torque threshold.

It can be learned that, in the normal mode, when the vehicle is put in the park gear, if the traveling speed of the vehicle is low, and output torque of the second motor is small, in this case, the second motor can be turned off, to reduce energy consumption.

In an implementation, with reference to a determining diagram shown in FIG. 3E, when the driving mode of the vehicle is the normal mode, the gear of the vehicle is the drive gear, the reverse gear, or the neutral gear, and all the following conditions are met, the second motor is controlled to be turned off:
the status of the first motor is not faulty;
the traveling speed of the vehicle is not less than a third speed threshold;
the requested torque of the second motor is not greater than a third torque threshold; and
the actual torque of the second motor is not greater than a fourth torque threshold, where the fourth torque threshold is greater than the third torque threshold.

Herein, the third speed threshold, the third torque threshold, and the fourth torque threshold may be preset based on experience.

For example, the third speed threshold is greater than the second speed threshold, and/or the fourth torque threshold is equal to the second torque threshold.

It can be learned that, in the normal mode, when the vehicle is put in any one of the drive gear, the reverse gear, and the neutral gear, if the traveling speed of the vehicle is high, but the requested torque and the actual torque of the second motor are small, in this case, the second motor is turned off. In this way, when rolling resistance of a wheel reaches a threshold due to the high speed, tooth surfaces of gear wheels of a drive shaft of the second motor can still be well fitted. This can not only improve driving stability of the vehicle, but also eliminate interference of NVH.

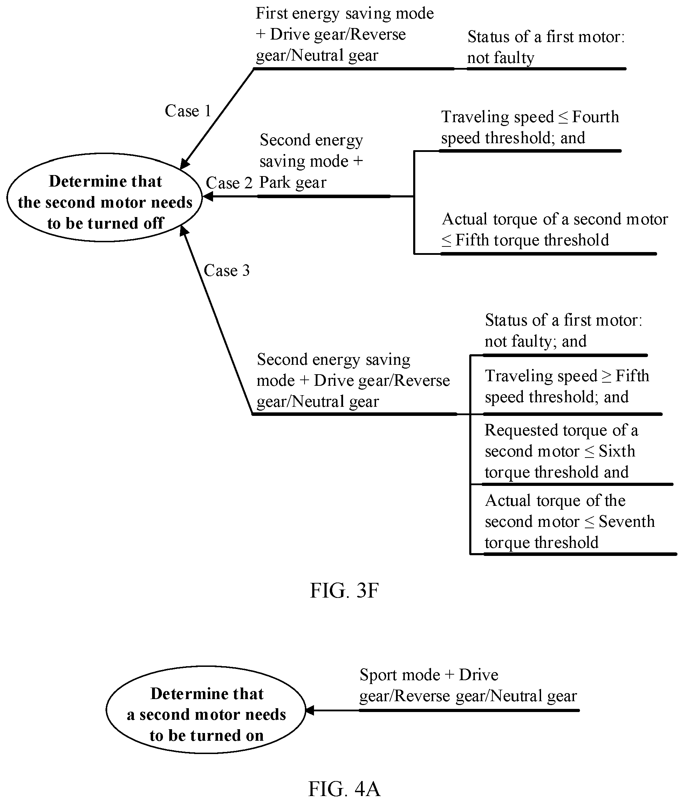

In an implementation, with reference to a determining diagram shown in FIG. 3F, when the driving mode of the vehicle is the energy saving mode, the energy saving mode may be classified into the first energy saving mode and the second energy saving mode. Endurance duration of the vehicle in the first energy saving mode is greater than endurance duration of the vehicle in the second energy saving mode. In this case, determining that the second motor needs to be turned off may alternatively be the following cases 1 to 3.

Case 1: When the energy saving mode is the first energy saving mode, the gear of the vehicle is the drive gear, the reverse gear, or the neutral gear, and the status of the first motor is not faulty, the second motor is controlled to be turned off.

Case 2: When the energy saving mode is the second energy saving mode, the gear of the vehicle is the park gear, and all the following conditions are met, the second motor is controlled to be turned off:
the traveling speed of the vehicle is not greater than a fourth speed threshold; and
the actual torque of the second motor is not greater than a fifth torque threshold.

Herein, the fourth speed threshold and the fifth torque threshold may be preset based on experience. For example, the fourth speed threshold may be equal to the second speed threshold, and the fourth speed threshold is less than the third speed threshold. For example, the fifth torque threshold may be equal to the fourth torque threshold.

Case 3: When the energy saving mode is the second energy saving mode, the gear of the vehicle is the drive gear, the reverse gear, or the neutral gear, and all the following conditions are met, the second motor is controlled to be turned off:
the status of the first motor is not faulty;
the traveling speed of the vehicle is not less than a fifth speed threshold;
the requested torque of the second motor is not greater than a sixth torque threshold; and
the actual torque of the second motor is not greater than a seventh torque threshold, where the seventh torque threshold is greater than the sixth torque threshold.

Herein, the fifth speed threshold, the sixth torque threshold, and the seventh torque threshold may be preset based on experience. For example, the fifth speed threshold is greater than the fourth speed threshold, and the fifth speed threshold is less than the third speed threshold. For example, the seventh torque threshold may be equal to the fourth torque threshold, and the sixth torque threshold may be equal to the third torque threshold.

The first energy saving mode may be the super power saving mode. In this mode, if the first motor is not faulty, the second motor is turned off, to reduce energy consumption and improve the cost-effectiveness of the vehicle.

The second energy saving mode may be the economy mode. In this mode, if the vehicle is put in the park gear, a current vehicle speed is low, and the actual torque of the second motor is small, it indicates that a driving force the second motor is currently expected to provide may be so small as to be negligible. In this case, the second motor can be turned off, to reduce energy consumption and improve the cost-effectiveness of the vehicle. In this mode, if the vehicle is put in any one of the drive gear, the reverse gear, and the neutral gear, the first motor is not faulty, and a current vehicle speed is greater than a vehicle speed threshold, but both requested torque and actual torque of the first motor are low, it indicates that working of merely the first motor can meet a driving requirement of the vehicle in the economy mode. In this case, the second motor can be turned off, to reduce energy consumption and improve the cost-effectiveness of the vehicle.

### (2) The second motor needs to be turned on.

In this embodiment of this application, if the second motor needs to be turned on, the second motor is not faulty by default, that is, the status of the second motor may always be not faulty.

In this embodiment of this application, in addition to the driving mode of the vehicle, the reference information further includes the gear of the vehicle. The controlling, based on the driving mode of the vehicle, the second motor to be turned on or turned off includes: controlling, based on the driving mode of the vehicle and the gear of the vehicle, the second motor to be turned on.

In an implementation, with reference to a determining diagram shown in FIG. 4A, when the driving mode of the vehicle is the sport mode, and the gear of the vehicle is the drive gear, the reverse gear, or the neutral gear, the second motor is controlled to be turned on.

It can be learned that, in the sport mode, there is a high probability of turning on the second motor, to provide a sufficient power source for the vehicle and therefore improve acceleration performance of the vehicle.

Further, the reference information further includes at least one of the traveling speed of the vehicle, the status of the first motor, and the requested torque of the second motor. The controlling, based on the driving mode of the vehicle and the gear of the vehicle, the second motor to be turned on includes: controlling, based on the driving mode of the vehicle, the gear of the vehicle, and the at least one of the traveling speed of the vehicle, the status of the first motor, and the requested torque of the second motor, the second motor to be turned on.

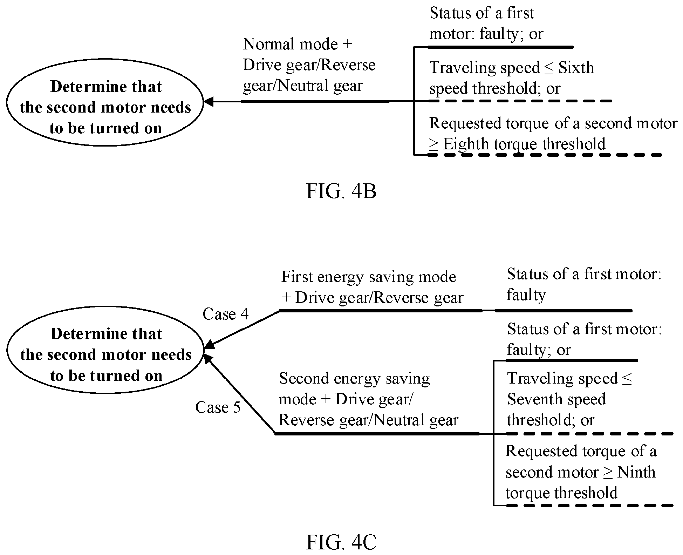

In an implementation, with reference to a determining diagram shown in FIG. 4B, when the driving mode of the vehicle is the normal mode, the gear of the vehicle is the drive gear, the reverse gear, or the neutral gear, and at least one of the following conditions is met, the second motor is controlled to be turned on:
the status of the first motor is faulty;
the traveling speed of the vehicle is not greater than a sixth speed threshold; and
the requested torque of the second motor is not less than an eighth torque threshold.

Herein, the sixth speed threshold and the eighth torque threshold may be preset based on experience.

It can be learned that, in the normal mode, when the vehicle is put in any one of the drive gear, the reverse gear, and the neutral gear, if the first motor of the vehicle is faulty, the second motor is turned on to replace the first motor in providing a driving force for the vehicle, so that normal traveling of the vehicle can be ensured; and/or if the requested torque of the second motor is large, the second motor is turned on, so that the vehicle can respond to the power requirement in time; and/or if the traveling speed of the vehicle is within a preset range, the second motor is turned on, so that it can be ensured that the vehicle meets an endurance requirement and an acceleration performance requirement in the normal mode.

In an implementation, with reference to a determining diagram shown in FIG. 4C, when the driving mode of the vehicle is the energy saving mode, the energy saving mode may be classified into the first energy saving mode and the second energy saving mode. The endurance duration of the vehicle in the first energy saving mode is greater than the endurance duration of the vehicle in the second energy saving mode. In this case, determining that the second motor needs to be turned on may alternatively be the following cases 4 and 5.

Case 4: When the energy saving mode is the first energy saving mode, the gear of the vehicle is the drive gear or the reverse gear, and the status of the first motor is faulty, the second motor is controlled to be turned on.

Case 5: When the energy saving mode is the second energy saving mode, the gear of the vehicle is the drive gear, the reverse gear, or the neutral gear, and at least one of the following conditions is met, the second motor is controlled to be turned on:
the status of the first motor is faulty;
the traveling speed of the vehicle is not greater than a seventh speed threshold; and
the requested torque of the second motor is not less than a ninth torque threshold.

Herein, the seventh speed threshold and the ninth torque threshold may be preset based on experience. For example, the seventh speed threshold is less than the sixth speed threshold, and the ninth torque threshold may be equal to the eighth torque threshold.

The first energy saving mode may be the super power saving mode. In this mode, when the vehicle is put in the drive gear or the reverse gear, only if the first motor is faulty, the second motor is turned on, to support normal traveling of the vehicle in the first energy saving mode. The second energy saving mode may be the economy mode. In the economy mode, when the vehicle is put in any one of the drive gear, the reverse gear, and the neutral gear, if the first motor of the vehicle is faulty, the second motor is turned on to replace the first motor in providing a driving force for the vehicle, so that normal traveling of the vehicle in the economy mode can be ensured; and/or if the requested torque of the second motor is large, the second motor is turned on, so that the vehicle can respond to the power requirement in time; and/or if the traveling speed of the vehicle is within a preset range, the second motor is turned on, so that it can be ensured that the vehicle meets an endurance requirement and an acceleration performance requirement in the economy mode.

In this embodiment of this application, in a traveling process of the vehicle, the driving mode of the vehicle may be changed, and/or the gear may be switched. For example, driving modes are the same, but gears are different, or driving modes are different, but gears are the same, or driving modes are different, and gears are different. In this case, whether the second motor needs to be turned off may be determined based on FIG. 3A to FIG. 3F, or whether the second motor needs to be turned on may be determined based on FIG. 4A to FIG. 4C. It may be understood that decisions on whether the second motor needs to be turned on or turned off before and after the change may be the same or may be different. Specifically, the following four cases are included: (1) It is determined before the change that the second motor needs to be turned on, and it is determined after the change that the second motor needs to be turned off. (2) It is determined before the change that the second motor needs to be turned on, and it is determined after the change that the second motor still needs to be turned on. (3) It is determined before the change that the second motor needs to be turned off, and it is determined after the change that the second motor needs to be turned on. (4) It is determined before the change that the second motor needs to be turned off, and it is determined after the change that the second motor still needs to be turned off.

For example, that the second motor is controlled to be turned off may be understood as that the second motor is currently in an on state, and when it is determined that the second motor needs to be turned off, the second motor is controlled to switch from on to off. That the second motor is controlled to be turned off may alternatively be understood as that the second motor is currently in an off state, and when it is determined that the second motor needs to be turned off, the second motor is controlled to remain off.

For example, that the second motor is controlled to be turned on may be understood as that the second motor is currently in the off state, and when it is determined that the second motor needs to be turned on, the second motor is controlled to switch from off to on. That the second motor is controlled to be turned on may alternatively be understood as that the second motor is currently in the on state, and when it is determined that the second motor needs to be turned on, the second motor is controlled to remain on.

It can be learned that, in this embodiment of this application, the motor of the vehicle can be flexibly controlled in different driving modes. In addition, in a process of determining whether the motor needs to be turned on or turned off, not only the status of the motor receives attention, but also factors such as the driving mode, the gear of the vehicle, and the traveling speed are considered from a perspective of vehicle running. This improves the cost-effectiveness of the vehicle and driving smoothness of the vehicle.

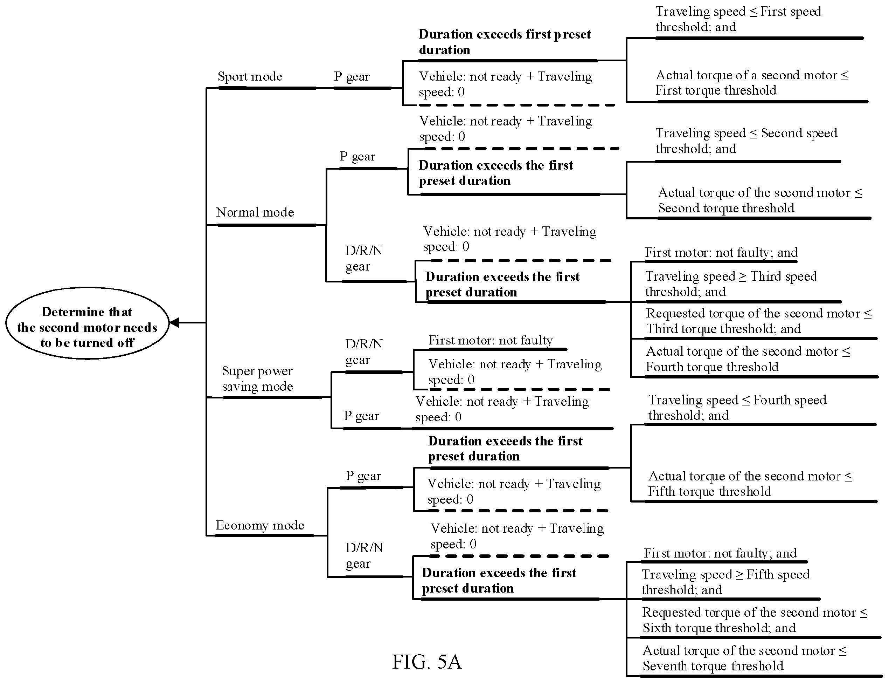

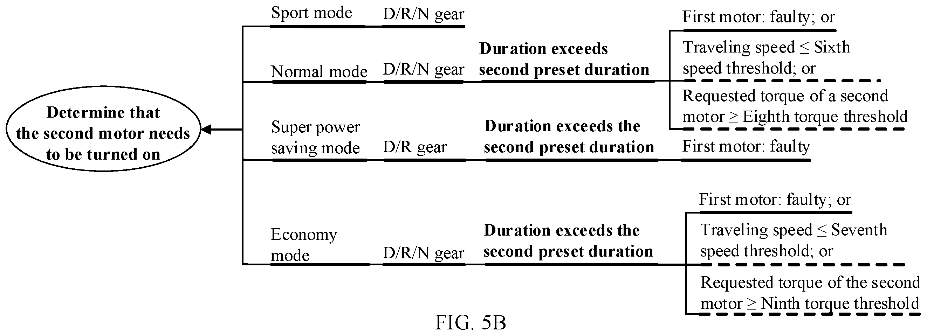

To more clearly display turn-off and turn-on statuses of the second motor in different driving modes, the turn-off statuses of the second motor in different driving modes are summarized based on FIG. 3A to FIG. 3F. For a summary result, refer to FIG. 5A. The turn-on statuses of the second motor in different driving modes are summarized based on FIG. 4A to FIG. 4C. For a summary result, refer to FIG. 5B. Herein, in FIG. 5A or FIG. 5B, for example, the first energy saving mode is the super power saving mode, and the second energy saving mode is the economy mode.

In FIG. 5A, a D gear is the drive gear, an R gear is the reverse gear, an N gear is the neutral gear, and a P gear is the park gear. "Vehicle: not ready" indicates that the status of the vehicle is the non-drivable state. "First motor: not faulty" indicates that the status of the first motor is not faulty. In FIG. 5B, "First motor: faulty" indicates that the status of the first motor is faulty.

FIG. 3A is used as an example to describe in detail content in FIG. 5A corresponding to that in FIG. 3A. It can be learned from FIG. 3A that, when the driving mode of the vehicle is the energy saving mode or the normal mode, the status of the vehicle is the non-drivable state, and the traveling speed is 0, it is determined that the second motor needs to be turned off. It can be learned from FIG. 5A that, when the driving mode is the normal mode, the status of the vehicle is the non-drivable state (that is, not ready), and the traveling speed is 0, it is determined that the second motor needs to be turned off. In this case, the gear may be any one of the D gear, the R gear, the N gear, and the P gear. In other words, the gear is not limited. In FIG. 5A, the energy saving mode includes the super power saving mode and the economy mode. Correspondingly, based on branches of the super power saving mode and the economy mode shown in FIG. 5A, it may be learned that in the super power saving mode or the economy mode, when the status of the vehicle is the non-drivable state, and the traveling speed is 0, it is determined that the second motor needs to be turned off.

In FIG. 5A, the sport mode is used as an example to describe a case in which the second motor is turned off in the sport mode. In FIG. 5A, there are two cases in which the second motor is turned off in the sport mode. In a first case, in the sport mode, when the gear of the vehicle is the P gear, the status of the vehicle is the non-drivable state, and the traveling speed of the vehicle is 0, it is determined that the second motor needs to be turned off. In a second case, in the sport mode, when the gear of the vehicle is the P gear, the traveling speed is not greater than the first speed threshold, and the actual torque of the second motor is not greater than the first torque threshold, it is determined that the second motor needs to be turned off. In some possible embodiments, required duration for which the vehicle meets motor turn-off conditions (that is, the traveling speed is not greater than the first speed threshold, and the actual torque of the second motor is not greater than the first torque threshold) in the second case may be further limited. For example, in the sport mode, when the gear of the vehicle is the P gear, all the following conditions are met, and duration exceeds first preset duration, it is determined that the second motor needs to be turned off: the traveling speed is not greater than the first speed threshold; and the actual torque of the second motor is not greater than the first torque threshold. In this way, the duration for which the vehicle meets the motor turn-off condition is limited, so that the second motor can be prevented from being frequently switched between the on state and the off state.

In FIG. 5A, it can be learned that, when the driving mode of the vehicle is the sport mode, and only when the gear is the park gear, there is a possibility of controlling the second motor to be turned off. In the sport mode, when the gear of the vehicle is the drive gear, the reverse gear, or the neutral gear, the second motor is not turned off, to ensure sufficient power of the vehicle.

In some possible embodiments, required duration for which the vehicle meets a motor turn-on condition may be further limited. For example, in FIG. 5B, the normal mode is used as an example. When the driving mode of the vehicle is the normal mode, the gear of the vehicle is the D gear, the R gear, or the N gear, at least one of the following conditions is met, and duration exceeds second preset duration, it is determined that the second motor needs to be turned on: the status of the first motor is faulty; the traveling speed is not greater than the sixth speed threshold; and the requested torque of the second motor is not less than the eighth torque threshold. In this way, the duration for which the vehicle meets the motor turn-on condition is limited, so that the second motor can be prevented from being frequently switched between the on state and the off state.

For example, the first preset duration that is set in FIG. 5A is greater than the second preset duration that is set in FIG. 5B. In this case, when the vehicle has a request for high torque, the second motor can be turned on in time, so that the vehicle can respond to a power request in time, and both the cost-effectiveness of the vehicle and the driving smoothness of the vehicle are considered when the second motor is controlled to be turned off.

In some possible embodiments, when the vehicle is in a same driving mode and a same gear, a preset speed threshold corresponding to the vehicle when the second motor is turned on is less than a preset speed threshold corresponding to the vehicle when the second motor is turned off. In this way, the switch apparatus can be prevented from being frequently turned on or turned off, and the second motor can also be prevented from being frequently turned on or turned off. This helps prolong a service life of the switch apparatus and a service life of the second motor.

For example, the driving mode is the normal mode, and the gear of the vehicle is the D gear. In FIG. 5A, when the vehicle is in the normal mode, and the gear is the D gear, a preset speed threshold corresponding to the vehicle when the second motor is turned off is the third speed threshold. In FIG. 5B, when the vehicle is in the normal mode, and the gear is the D gear, a preset speed threshold corresponding to the vehicle when the second motor is turned on is the sixth speed threshold. The third speed threshold is greater than the sixth speed threshold.

For example, the driving mode is the economy mode, and the gear of the vehicle is the N gear. In FIG. 5A, when the vehicle is in the economy mode, and the gear is the N gear, a preset speed threshold corresponding to the vehicle when the second motor is turned off is the fifth speed threshold. In FIG. 5B, when the vehicle is in the economy mode, and the gear is the N gear, a preset speed threshold corresponding to the vehicle when the second motor is turned on is the seventh speed threshold. The fifth speed threshold is greater than the seventh speed threshold.

It can be learned from FIG. 5A and FIG. 5B that there are both a corresponding enabling condition for turning off the second motor and a corresponding enabling condition for turning on the second motor. The corresponding enabling condition for turning off the second motor may also be referred to as the motor turn-off condition, and the corresponding enabling condition for turning on the second motor may also be referred to as the motor turn-on condition. It can be learned that the motor turn-off condition is stricter than the motor turn-on condition. This is reflected in the following: When a plurality of motor turn-off conditions are involved, the plurality of conditions are required to be met at the same time, and duration is required to be long, to perform enabling. In this way, when the second motor is turned off, not only reduction in energy consumption is facilitated, but also the smoothness of the vehicle can be ensured, so that a passenger has better riding experience. However, when a plurality of motor turn-on conditions are involved, merely at least one of the plurality of conditions is required to be met, and duration is required to be merely short, to perform enabling. In this way, the second motor can be turned on in time, and the vehicle can also respond to the power request in time.

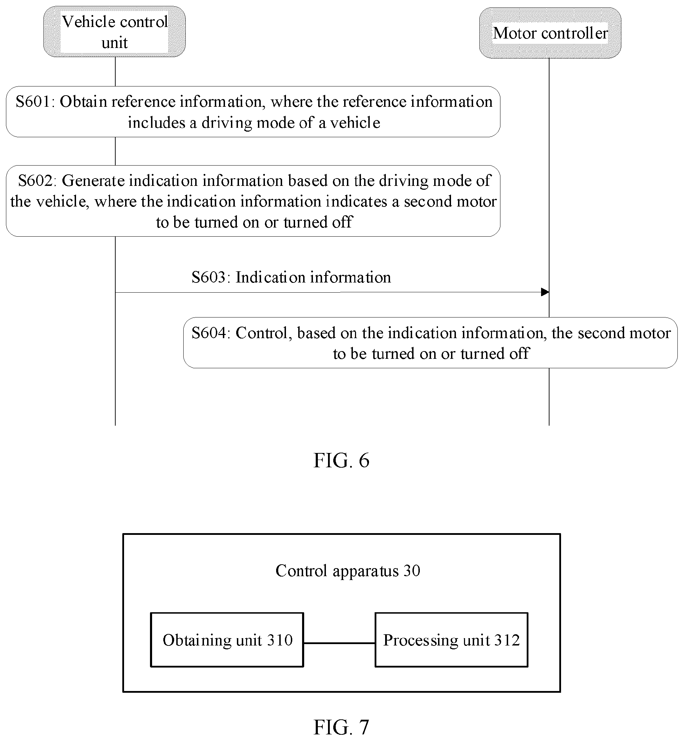

FIG. 6 is a schematic flowchart of another control method according to an embodiment of this application. The method may be applied to a motor control system. The system may be, for example, the system shown in FIG. 1B. The system includes at least a vehicle control unit and a motor controller.

S601: The vehicle control unit obtains reference information, where the reference information includes a driving mode of a vehicle.

Herein, the vehicle includes a first motor and a second motor. Both the first motor and the second motor may be configured to provide a driving force for the vehicle. It is assumed that the second motor is a to-be-controlled motor in this embodiment of this application. For details about the vehicle, the first motor, and the second motor, refer to descriptions of corresponding content in the embodiment in FIG. 2. Details are not described herein again.

For details about this step, refer to related descriptions of S201 in the embodiment in FIG. 2. For brevity of this specification, details are not described herein again.

S602: The vehicle control unit generates indication information based on the driving mode of the vehicle, where the indication information indicates the second motor to be turned on or turned off.

In this embodiment of this application, if it is determined, based on any one of FIG. 3A to FIG. 3F or FIG. 5A and based on the reference information in S601, that the second motor needs to be turned off, the indication information is generated, where the indication information indicates the second motor to be turned off.

In this embodiment of this application, if it is determined, based on any one of FIG. 4A to FIG. 4C or FIG. 5B and based on the reference information in S601, that the second motor needs to be turned on, the indication information is generated, where the indication information indicates the second motor to be turned on.

It should be noted that, for specific determining processes of FIG. 3A to FIG. 3F and FIG. 4A to FIG. 4C, refer to related descriptions of S202 in the embodiment in FIG. 2. Details are not described herein again.

S603: The vehicle control unit sends the indication information to the motor controller.

Correspondingly, the motor controller receives the indication information from the vehicle control unit.

Herein, the motor controller is a motor controller of the second motor.

S604: The motor controller controls, based on the indication information, the second motor to be turned on or turned off.

In an implementation, when the indication information indicates the second motor to be turned on, the motor controller controls, based on the indication information, the second motor to be turned on.

In an implementation, when the indication information indicates the second motor to be turned off, the motor controller controls, based on the indication information, the second motor to be turned off.

In this embodiment of this application, the controlling the second motor to be turned on or turned off includes: controlling, through a switch apparatus, the second motor to be turned on or turned off. The switch apparatus is connected to both the motor controller and the second motor. For details about the switch apparatus, refer to descriptions of corresponding content in S202. Details are not described herein again.

It can be learned that, in this embodiment of this application, the vehicle control unit may determine, based on information such as the driving mode, a gear, and a traveling speed of the vehicle, whether a target motor needs to be turned on or turned off, and indicate a motor controller of the target motor to control the target motor to be turned on or turned off. This helps improve cost-effectiveness and driving smoothness of the vehicle.

FIG. 7 is a diagram of a structure of a control apparatus according to an embodiment of this application. The control apparatus 30 includes an obtaining unit 310 and a processing unit 312. The apparatus 30 may be implemented by hardware, software, or a combination of software and hardware.

The obtaining unit 310 is configured to obtain reference information, where the reference information includes a driving mode of a vehicle. The processing unit 312 is configured to control, based on the driving mode of the vehicle, a second motor to be turned on or turned off.

The control apparatus 30 may be configured to implement the method described in the embodiment in FIG. 2. In the embodiment in FIG. 2, the obtaining unit 310 may be configured to perform S201, and the processing unit 312 may be configured to perform S202.

In some possible embodiments, the control apparatus 30 may also be configured to implement the method on a side of the vehicle control unit described in the embodiment in FIG. 6. In the embodiment in FIG. 6, the obtaining unit 310 may perform S601, and the processing unit 312 may be configured to perform S602 and S603.

In some possible embodiments, the control apparatus 30 may be further configured to implement the method on a side of the motor controller described in the embodiment in FIG. 6. In the embodiment in FIG. 6, the obtaining unit 310 may perform S603, and the processing unit 312 may be configured to perform S604.

Division of the units in the apparatus 30 is merely division of logical functions. During actual implementation, all or some of the units may be integrated into one physical entity, or may be physically separated. In addition, the unit in the apparatus may be implemented in a form of software invoked by a processor. For example, the apparatus includes a processor. The processor is connected to a memory. The memory stores instructions. The processor invokes the instructions stored in the memory, to implement any one of the foregoing methods or functions of the units in the apparatus. The processor is, for example, a general-purpose processor, for example, a central processing unit (central processing unit, CPU) or a microprocessor. The memory is a memory in the apparatus or a memory outside the apparatus. Alternatively, the unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the units. All the units in the apparatus may be implemented in a form of software invoked by a processor, or may be implemented in a form of a hardware circuit, or some of the units may be implemented in a form of software invoked by a processor, and the remaining units may be implemented in a form of a hardware circuit.

In this embodiment of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to configure the hardware circuit may be understood as a process in which the processor loads instructions to implement the functions of some or all of the units. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that the units in the apparatus may be configured as one or more processors (or processing circuits) for implementing the foregoing method, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units in the apparatus. Types of the at least one processor may be different. For example, the at least one processor includes a CPU and an FPGA, a CPU and an artificial intelligence processor, and a CPU and a GPU.

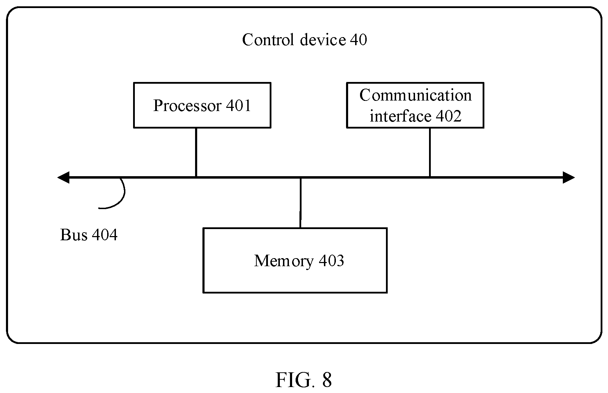

FIG. 8 shows a control device according to an embodiment of this application.

As shown in FIG. 8, the control device 40 includes a processor 401, a communication interface 402, a memory 403, and a bus 404. The processor 401, the memory 403, and the communication interface 402 communicate with each other through the bus 404. It should be understood that quantities of processors and memories in the control device 40 are not limited in this application.

The control device 40 may be a vehicle control unit, or may be a motor controller, or may be a component in a vehicle control unit or a motor controller. The component may be, for example, a chip or an integrated circuit.

For example, the vehicle control unit may be an integrated software and hardware platform that supports control of a vehicle body and control of a chassis, for example, a vehicle domain controller (vehicle domain controller, VDC), or may be an integrated software and hardware platform configured to support control of the chassis, for example, a chassis domain controller. The motor controller may be, for example, a microcontroller unit (microcontroller unit, MCU) or a microprocessor unit (microprocessor unit, MPU).

The bus 404 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 8. However, it does not indicate that there is only one bus or only one type of bus. The bus 404 may include a path for transmitting information between components (for example, the memory 403, the processor 401, and the communication interface 402) of the control device 40.

For the processor 401, refer to related descriptions of the processor in the foregoing embodiment. Details are not described herein again.

The memory 403 is configured to provide storage space, and the storage space may store data such as an operating system and a computer program. The memory 403 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 403 may exist independently, or may be integrated into the processor 401.

The communication interface 402 may be configured to provide an information input or output for the processor 401. Alternatively, the communication interface 402 may be configured to receive data from the outside and/or send data to the outside, and may be an interface of a wired link, including an Ethernet cable or the like, or may be an interface of a wireless link (for example, Wi-Fi, Bluetooth, universal wireless transmission, or the like). Alternatively, the communication interface 402 may further include a transmitter (for example, a radio frequency transmitter or an antenna), a receiver, or the like coupled to the interface.

The processor 401 in the control device 40 is configured to read the computer program stored in the memory 403, to perform the foregoing method, for example, the method described in FIG. 2 or FIG. 6.

In a possible design, the control device 40 may be one or more modules in an entity for executing the method shown in FIG. 2. The processor 401 may be configured to read one or more computer programs stored in the memory, to perform the following operations:
obtaining reference information by using an obtaining unit 310, where the reference information includes a driving mode of a vehicle; and
controlling, based on the driving mode of the vehicle, a second motor to be turned on or turned off.

In a possible design, the control device 40 may be one or more modules in an entity (for example, a vehicle control unit) for executing the method shown in FIG. 6. The processor 401 may be configured to read one or more computer programs stored in the memory, to perform the following operations:
obtaining reference information by using an obtaining unit 310, where the reference information includes a driving mode of a vehicle;
generating indication information based on the driving mode of the vehicle, where the indication information indicates a second motor to be turned on or turned off; and
sending the indication information to a motor controller of the second motor.

In a possible design, the control device 40 may be one or more modules in an entity (for example, a motor controller) for executing the method shown in FIG. 6. The processor 401 may be configured to read one or more computer programs stored in the memory, to perform the following operations:
receiving indication information by using an obtaining unit 310; and
controlling, based on the indication information, a second motor to be turned on or turned off.

In the foregoing embodiments in this specification, the descriptions of embodiments have respective focuses. For a part that is not described in detail in an embodiment, refer to related descriptions in other embodiments. In addition, in embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

It should be noted that, a person of ordinary skill in the art may understand that, all or some of the steps of the methods in the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the part that makes contributions, or all or some of the technical solutions may be implemented in a form of a software product. The computer program product is stored in a storage medium and includes several instructions for instructing a device (which may be a personal computer, a server, a network device, a robot, a single-chip microcomputer, a chip, or the like) to perform all or some of the steps of the methods described in embodiments of this application.

## Claims

1. A control method, wherein the method is applied to a vehicle, the vehicle comprises a first motor and a second motor, and the method comprises:
obtaining reference information, wherein the reference information comprises a driving mode of the vehicle; and
controlling, based on the driving mode of the vehicle, the second motor to be turned on or turned off.

2. The method according to claim 1, wherein the reference information further comprises a traveling speed of the vehicle; and
the controlling, based on the driving mode of the vehicle, the second motor to be turned on or turned off comprises:
controlling, based on the driving mode and the traveling speed, the second motor to be turned off.

3. The method according to claim 2, wherein the reference information further comprises a status of the vehicle; and
the controlling, based on the driving mode and the traveling speed, the second motor to be turned off comprises:
controlling, based on the status of the vehicle, the driving mode, and the traveling speed, the second motor to be turned off.

4. The method according to claim 3, wherein the controlling, based on the status of the vehicle, the driving mode, and the traveling speed, the second motor to be turned off comprises:
when the traveling speed is 0, the driving mode is an energy saving mode or a normal mode, and the status of the vehicle is a non-drivable state, controlling the second motor to be turned off.

5. The method according to claim 3, wherein the reference information further comprises a gear of the vehicle; and
the controlling, based on the status of the vehicle, the driving mode, and the traveling speed, the second motor to be turned off comprises:
when the gear is a park gear, the traveling speed is 0, the driving mode is a sport mode, and the status of the vehicle is a non-drivable state, controlling the second motor to be turned off.

6. The method according to claim 2, wherein the reference information further comprises at least two of a gear of the vehicle, a status of the first motor, requested torque of the second motor, and actual torque of the second motor; and
the controlling, based on the driving mode and the traveling speed, the second motor to be turned off comprises:
controlling, based on the driving mode, the traveling speed, and the at least two of the gear, the status of the first motor, the requested torque of the second motor, and the actual torque of the second motor, the second motor to be turned off.

7. The method according to claim 6, wherein the controlling, based on the driving mode, the traveling speed, and the at least two of the gear, the status of the first motor, the requested torque of the second motor, and the actual torque of the second motor, the second motor to be turned off comprises:
when the driving mode is a sport mode, the gear is a park gear, and all the following conditions are met, controlling the second motor to be turned off:
the traveling speed is not greater than a first speed threshold; and
the actual torque of the second motor is not greater than a first torque threshold.

8. The method according to claim 6, wherein the controlling, based on the driving mode, the traveling speed, and the at least two of the gear, the status of the first motor, the requested torque of the second motor, and the actual torque of the second motor, the second motor to be turned off comprises:
when the driving mode is a normal mode, the gear is a park gear, and all the following conditions are met, controlling the second motor to be turned off:
the traveling speed is not greater than a second speed threshold; and
the actual torque of the second motor is not greater than a second torque threshold.

9. The method according to claim 6, wherein the controlling, based on the driving mode, the traveling speed, and the at least two of the gear, the status of the first motor, the requested torque of the second motor, and the actual torque of the second motor, the second motor to be turned off comprises:
when the driving mode is a normal mode, the gear is a drive gear, a reverse gear, or a neutral gear, and all the following conditions are met, controlling the second motor to be turned off:
the status of the first motor is not faulty;
the traveling speed is not less than a third speed threshold;
the requested torque of the second motor is not greater than a third torque threshold; and
the actual torque of the second motor is not greater than a fourth torque threshold, wherein the fourth torque threshold is greater than the third torque threshold.

10. The method according to claim 6, wherein the driving mode is an energy saving mode, and the controlling, based on the driving mode, the traveling speed, and the at least two of the gear, the status of the first motor, the requested torque of the second motor, and the actual torque of the second motor, the second motor to be turned off comprises:
when the energy saving mode is a first energy saving mode, the gear is a drive gear, a reverse gear, or a neutral gear, and the status of the first motor is not faulty, controlling the second motor to be turned off; or
when the energy saving mode is a second energy saving mode, the gear is a park gear, and all the following conditions are met, controlling the second motor to be turned off: the traveling speed is not greater than a fourth speed threshold; and the actual torque of the second motor is not greater than a fifth torque threshold; or
when the energy saving mode is a second energy saving mode, the gear is a drive gear, a reverse gear, or a neutral gear, and all the following conditions are met, controlling the second motor to be turned off:
the status of the first motor is not faulty;
the traveling speed is not less than a fifth speed threshold;
the requested torque of the second motor is not greater than a sixth torque threshold; and
the actual torque of the second motor is not greater than a seventh torque threshold, wherein the seventh torque threshold is greater than the sixth torque threshold, wherein
endurance range of the vehicle in the first energy saving mode is greater than endurance duration of the vehicle in the second energy saving mode.

11. The method according to any one of claims 1 to 10, wherein the reference information further comprises the gear of the vehicle; and
the controlling, based on the driving mode, the second motor to be turned on or turned off comprises:
controlling, based on the driving mode and the gear, the second motor to be turned on.

12. The method according to claim 11, wherein the controlling, based on the driving mode and the gear, the second motor to be turned on comprises:
when the driving mode is the sport mode, and the gear is the drive gear, the reverse gear, or the neutral gear, controlling the second motor to be turned on.

13. The method according to claim 11, wherein the reference information further comprises at least one of the traveling speed of the vehicle, the status of the first motor, and the requested torque of the second motor; and
the controlling, based on the driving mode and the gear, the second motor to be turned on comprises:
controlling, based on the driving mode, the gear, and the at least one of the traveling speed, the status of the first motor, and the requested torque of the second motor, the second motor to be turned on.

14. The method according to claim 13, wherein the controlling, based on the driving mode, the gear, and the at least one of the traveling speed, the status of the first motor, and the requested torque of the second motor, the second motor to be turned on comprises:
when the driving mode is the normal mode, the gear is the drive gear, the reverse gear, or the neutral gear, and at least one of the following conditions is met, controlling the second motor to be turned on:
the status of the first motor is faulty;
the traveling speed is not greater than a sixth speed threshold; and
the requested torque of the second motor is not less than an eighth torque threshold.

15. The method according to claim 13, wherein the controlling, based on the driving mode, the gear, and the at least one of the traveling speed, the status of the first motor, and the requested torque of the second motor, the second motor to be turned on comprises:
when the driving mode is the first energy saving mode, the gear is the drive gear or the reverse gear, and the status of the first motor is faulty, controlling the second motor to be turned on; or
when the driving mode is the second energy saving mode, the gear is the drive gear, the reverse gear, or the neutral gear, and at least one of the following conditions is met, controlling the second motor to be turned on:
the status of the first motor is faulty;
the traveling speed is not greater than a seventh speed threshold; and
the requested torque of the second motor is not less than a ninth torque threshold, wherein
the endurance duration of the vehicle in the first energy saving mode is greater than the endurance duration of the vehicle in the second energy saving mode.

16. The method according to any one of claims 1 to 15, wherein when the vehicle is in a same driving mode and a same gear, a preset speed threshold corresponding to the vehicle when the second motor is turned on is less than a preset speed threshold corresponding to the vehicle when the second motor is turned off.

17. The method according to any one of claims 1 to 16, wherein when the vehicle is in a same driving mode and a same gear, required duration for which the vehicle meets a corresponding motor turn-on condition is less than required duration for which the vehicle meets a corresponding motor turn-off condition.

18. The method according to any one of claims 1 to 17, wherein the controlling the second motor to be turned on or turned off comprises:
controlling, through a switch apparatus, the second motor to be turned on or turned off, wherein the switch apparatus is connected to the second motor, wherein
when the switch apparatus is turned on, the second motor is turned on; or
when the switch apparatus is turned off, the second motor is turned off.

19. A control apparatus, wherein the apparatus is configured to control a vehicle, the vehicle comprises a first motor and a second motor, and the apparatus comprises:
an obtaining unit, configured to obtain a driving mode of the vehicle; and
a processing unit, configured to control, based on the driving mode of the vehicle, the second motor to be turned on or turned off.

20. A control apparatus, wherein the apparatus comprises at least one processor and a communication interface; and
the communication interface is configured to receive and/or send data, and/or the communication interface is configured to provide an input and/or an output for the processor, and the at least one processor is configured to implement the method according to any one of claims 1 to 18.

21. A motor control system, wherein the system comprises a switch apparatus and a control apparatus; and
the switch apparatus is connected to the control apparatus, and the control apparatus is configured to perform the method according to any one of claims 1 to 18.

22. A vehicle, wherein the vehicle comprises the apparatus according to claim 19 or 20, or comprises the system according to claim 21.

23. A computer-readable storage medium, wherein the computer-readable storage medium stores program instructions, and when the instructions are run on at least one processor, the method according to any one of claims 1 to 18 is implemented.

24. A computer program product, wherein when the computer program product runs on a processor, an apparatus is enabled to perform the method according to any one of claims 1 to 18.
